# FASCICULE DE BREVET EUROPEEN

(11) **EP 2 723 558 B1**
(45) Date de publication et mention de la délivrance du brevet: **24.06.2015**
(21) Numéro de dépôt: 12731051.4
(22) Date de dépôt: 23.05.2012
(51) Int. Cl.: B32B 3/02, B32B 3/10

(54) **AME DE MATERIAU STRUCTURAL FEUILLE ET PROCEDE D'ASSEMBLAGE**
KERN EINES BAUMATERIALS, BLATT UND MONTAGEVERFAHREN
CORE OF SHEET STRUCTURAL MATERIAL AND ASSEMBLY PROCESS

(30) Priorité: 23.06.2011 FR 1155567
(43) Date de publication de la demande: 30.04.2014
(73) Titulaire: Chermant, Alexis, 14640 Auberville (FR); Brun, Frédéric, 14000 Caen (FR)
(72) Inventeur: BRUN, Frédéric, 14000 Caen (FR)
(74) Mandataire: Cabinet Plasseraud
(86) Numéro de dépôt international: PCT/FR2012/051163
(87) Numéro de publication internationale: WO 2012/175835

(56) Documents cités:
- FR-A1- 2 922 476
- US-A- 4 178 736
- US-A- 4 282 619
- US-B1- 6 207 256

## Description

### DOMAINE DE L'INVENTION

La présente invention est relative à une âme de matériau structural, une feuille composant une telle âme, un matériau structural sandwich comportant une telle âme ainsi que le procédé de fabrication d'une telle âme.

Les matériaux structuraux sandwich sont généralement composés de deux peaux externes solidarisées sur les faces opposées d'une âme. Ladite âme peut être réalisée dans une grande variété de matières constitutives et est faite de telle sorte qu'elle possède une forte résistance structurale à la compression et à la flexion tout en conservant un poids minimal. Ces matériaux structuraux possèdent de nombreuses applications par exemple dans le domaine de l'aéronautique ou de l'automobile.

Parmi ces matériaux, les plus connus sont ceux comportant une âme en nid d'abeille. Ces âmes sont constituées de feuilles mises en forme puis fixées ensemble à des points précis pour constituer un réseau d'alvéoles de profil hexagonal, parfois déformé, qui s'étendent perpendiculairement audites peaux externes. De nombreux matériaux peuvent être utilisés pour la réalisation de cette âme, par exemple du carton, de l'aluminium, du plastique, des matières composites ou des métaux.

Les feuilles constituant l'âme du matériau structural étant disposées orthogonalement à la surface du sandwich et leur structure étant développable, les caractéristiques mécaniques des âmes en nid d'abeille sont donc fortement anisotropes. Celles-ci présentent, par exemple, une résistance moins bonne à la flexion qu'à la compression. Différentes structures ont été développées pour tenter de remédier à cet inconvénient.

### ARRIERE PLAN TECHNOLOGIQUE

Le document FR-A-2 922476 décrit un exemple d'une telle structure constituée d'un empilement de feuilles munies sur leurs faces d'une pluralité de nervures parallèles, lesdites nervures étant complémentaires d'une feuille à l'autre. L'empilement de ces feuilles constitue une structure non-développable présentant une amélioration de la rigidité en flexion et en compression.

### OBJETS DE L'INVENTION

La présente invention a pour but de proposer un matériau et une structure d'âme présentant de meilleures caractéristiques de résistance tout en possédant un poids plus faible et constituant une alternative économiquement viable aux solutions connues.

À cet effet, selon l'invention, l'âme de matériau structural sandwich est remarquable :
- en ce qu'elle comporte au moins une première et une deuxième feuilles munies d'une pluralité de troncs de pyramide à base polygonale répartis périodiquement,
- en ce que la superposition desdites première et deuxième feuilles forme un réseau tridimensionnel de canaux tubulaires creux s'étendant d'une face d'une feuille à une face d'une autre feuille selon une direction de canal, et définis chacun par une paroi périphérique, cette paroi périphérique étant fournie à la fois par la première feuille et par la seconde feuille.

Par réseau tridimensionnel de canaux, on entend que le réseau comprend au moins trois canaux dont les directions de canal sont non coplanaires.

Chacun desdits canaux possède une rigidité importante en compression suivant sa direction de canal. Le réseau des canaux tubulaires étant tridimensionnel, la résistance mécanique de la structure est donc importante dans toutes les directions de l'espace, ce qui confère au matériau une rigidité importante tant en flexion qu'en compression. L'âme de matériau structural selon l'invention présente en outre de très bonnes propriétés en tant qu'absorbeur d'énergie, par exemple lors de chocs. Enfin, les canaux ou les interstices inter canaux permettent le passage de câbles ainsi que l'installation aisée de capteurs ou de jauges physiques.

De façon avantageuse, lesdites première et deuxième feuilles peuvent être identiques. La deuxième feuille étant retournée par rapport à la première suivant un axe compris dans le plan de ladite feuille afin de créer ledit réseau de canaux creux lors de la superposition desdites feuilles. De cette sorte, le coût et la complexité de fabrication des âmes peuvent être réduits de façon importante.

De préférence, lesdits troncs de pyramide comprendront chacun une base, des faces, un sommet et des arêtes reliant la base au sommet, lesdites arêtes ménageant des zones rentrantes situées entre des surfaces périphériques d'adhésion. Les zones rentrantes d'une première feuille étant complétées par les surfaces en regard d'une deuxième feuille pour définir la paroi périphérique des canaux tubulaires creux. Ces deux feuilles seront fixées entre elles au niveau des surfaces périphériques d'adhésion par un procédé d'adhésion qui peut être par exemple un soudage, un thermocollage ou un assemblage.

Afin d'obtenir les meilleures propriétés mécaniques, le réseau des canaux tubulaires sera tridimensionnel, c'est-à-dire qu'il comprendra des canaux dont les directions de canal ne sont pas parallèles.

Selon un mode de réalisation de l'invention, la superposition des premières et secondes feuilles peut être réalisée en quinconce, la deuxième feuille étant alors placée à cheval sur plusieurs premières feuilles disposées côte à côte. Ceci permettra d'assurer une bonne liaison mécanique entre lesdites premières feuilles.

Pour étendre le matériau structural dans sa direction d'épaisseur, l'âme conforme à la présente invention est avantageusement telle :
- qu'elle comporte en outre une troisième et une quatrième feuilles présentant les mêmes caractéristiques que la première et la deuxième feuilles et dont la superposition dans la direction d'épaisseur forme un réseau tridimensionnel de canaux tubulaires creux,
- que lesdites première et quatrième feuilles sont superposées et fixées l'une à l'autre par le sommet de chacun desdits troncs de pyramide desdites première et quatrième feuilles.

Pour assurer la continuité des canaux creux lors de la superposition de plusieurs tels assemblages de feuilles, les sommets desdits troncs de pyramide desdites première et quatrième feuilles présenteront avantageusement une surface plane.

Selon un autre mode de réalisation de la présente invention, les sommets des troncs de pyramide desdites première et quatrième feuilles présenteront des parties en retrait permettant d'assurer l'alignement des directions de canal desdits canaux creux lors de la superposition de plusieurs assemblages de feuilles. Cet alignement confèrera les meilleures propriétés mécaniques à la structure.

L'invention a également pour objet une feuille munie d'une pluralité de troncs de pyramide à base polygonale répartis périodiquement. Lesdites pyramides présentant des zones rentrantes situées entre des surfaces périphériques d'adhésion, les zones rentrantes de deux telles feuilles superposées définissant alors des canaux tubulaires creux.

Une âme conforme à la présente invention peut aisément être munie d'au moins une peau externe fixée sur au moins l'une de ses faces opposées pour constituer un matériau structural sandwich.

Enfin, l'invention a également pour objet un procédé pour la réalisation d'une âme de matériau structural sandwich composée d'assemblage de plusieurs feuilles comportant au moins une première et deuxième feuilles munies sur au moins l'une de leurs faces d'une pluralité de troncs de pyramide à base polygonale répartis périodiquement, lesdites pyramides présentant des zones rentrantes situées entre les surfaces périphériques d'adhésion, les zones rentrantes desdites feuilles superposées définissant des canaux tubulaires creux, caractérisé en ce qu'il comprend au moins les étapes suivantes :
- une étape consistant à former lesdits troncs de pyramide dans lesdites feuilles, et
- une étape consistant à superposer et fixer l'une à l'autre lesdites feuilles.

Selon un premier mode de réalisation de ce procédé de fabrication, l'étape consistant à former les troncs de pyramide dans lesdites feuilles comprendra une étape de pliage desdites feuilles.

Selon un second mode de réalisation de ce procédé de fabrication, l'étape consistant à former les troncs de pyramide dans lesdites feuilles comprendra une étape de déformation plastique desdites feuilles.

Selon une variante de ces modes de réalisation, on pratiquera préalablement une pluralité d'ouvertures dans les feuilles de façon à alléger l'âme du matériau structural.

Par ailleurs on pourra former et assembler une troisième et une quatrième feuilles de façon identique auxdites première et deuxième feuilles puis superposer et fixer l'une à l'autre lesdites première et quatrième feuilles par les sommets de leurs troncs de pyramide.

D'une manière générale, certains modes de réalisation de l'invention présentent les avantages suivants. Le procédé de fabrication est facilement industrialisable car les étapes sont simples à mettre en oeuvre en utilisant des moyens techniques existants. Les feuilles peuvent être toutes identiques et la constitution du réseau tubulaire creux puis du matériau structural se fait simplement en retournant les feuilles avant de les superposer et de les assembler. L'âme de matériau structural sandwich peut être d'épaisseur et de dimensions arbitraires. La rigidité mécanique du matériau que ce soit en flexion ou en compression ne dépend que du réseau tubulaire creux, l'âme du matériau structural sandwich peut donc être allégée de façon importante en pratiquant des ouvertures dans les feuilles constituant la structure. Enfin le réseau tubulaire étant tridimensionnel, la résistance mécanique du matériau est beaucoup plus élevée, à masse volumique égale, que celle des matériaux de type nid d'abeille.

### BREVE DESCRIPTION DES DESSINS

D'autres caractéristiques et avantages de l'invention apparaîtront au cours de la description suivante.

Sur les dessins :
- la figure 1 est une vue en perspective d'une feuille extraite de l'assemblage constituant l'âme du matériau structural sandwich,
- la figure 2a présente une maille élémentaire extraite de la feuille précédente,
- la figure 2b et la figure 2c indiquent comment deux mailles élémentaires de deux feuilles sont superposées pour créer le réseau de canaux creux,
- les figures 2d et 2e correspondent aux coupes IID et IIE et illustrent la position des canaux tubulaires creux créés par la superposition des première et deuxième feuilles,
- la figure 3 présente un mode de réalisation dans lequel des ouvertures sont pratiquées dans les feuilles pour ne conserver que les canaux creux et des surfaces périphériques d'adhésion,
- la figure 4 présente l'assemblage de deux sandwichs constitué chacun par la superposition d'une première et d'une deuxième feuille,
- les figures 5a, 5b et 5c détaillent les structures situées aux sommets des troncs de pyramides et qui permettent l'empilement des sandwichs de la figure 4,
- la figure 6 présente un assemblage en quinconce de plusieurs feuilles pour constituer une structure de grande étendue.
- les figures 7a, 7b et 7c, présentent d'autres modes de réalisations conformes à la présente invention, dans lesquels les bases des troncs de pyramides, ainsi que le réseau que forment ces dernières sont différents,
- les figures 8a, 8b et 8c ainsi que les figures 9a et 9b présentent deux procédés de réalisation d'une feuille de la présente invention par pliage d'une feuille préalablement embossée,
- la figure 10 présente un procédé de fabrication de la présente invention suivant un mode de réalisation,

Sur les différentes figures, les mêmes références désignent des éléments identiques ou similaires.

### DESCRIPTION DETAILLEE

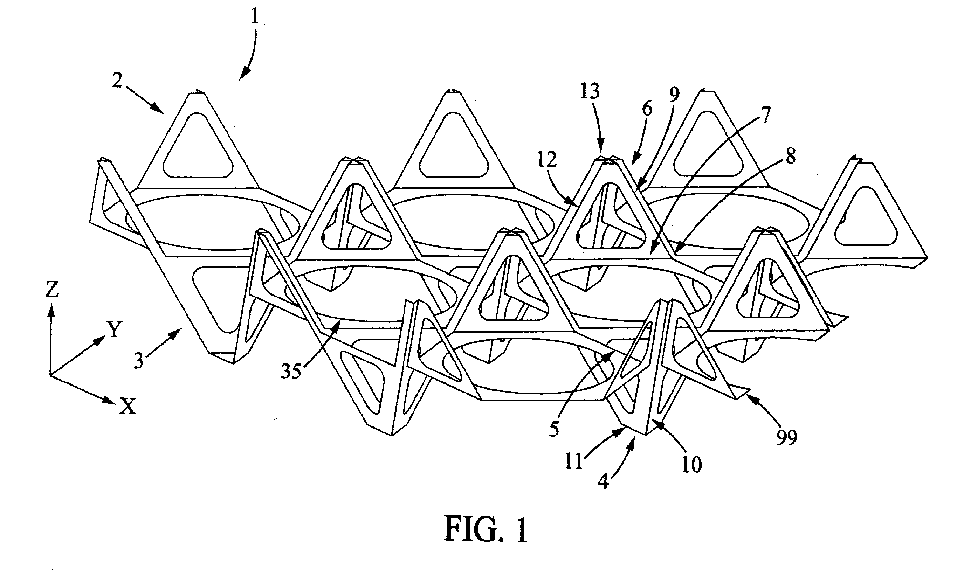

La figure 1 présente une feuille 1 extraite de l'assemblage constituant l'âme du matériau structural sandwich selon un mode de réalisation de la présente invention. Cette feuille 1 s'étend dans les directions d'extension X et Y et possède une face supérieure 2 ainsi qu'une face inférieure 3 situées de part et d'autre d'un plan médian 99, lesdites faces étant donc opposée dans la direction d'épaisseur Z.

Du côté de la face inférieure 3, la feuille présente un réseau périodique de troncs de pyramides 4 formés chacun d'un sommet 11, d'arêtes 10 ainsi que d'une base triangulaire 5 sur le plan médian 99. Du côté de la face supérieure 2, la feuille présente un réseau périodique de troncs de pyramides 6 constitués chacun d'une base 7, d'arêtes 12 et d'un sommet 13. Les bases 7 sont situées au niveau du plan médian 99. Elles sont globalement triangulaires avec des côtés rentrants 8 au niveau des sommets. Ces côtés rentrants 8 s'étendent le long des arêtes 12 pour former des zones rentrantes 9 qui courent de la base 7 au sommet 13 des troncs de pyramides 6.

Le réseau formé par lesdites bases 5 et lesdites bases 7 sur le plan médian 99 est un réseau kagomé, c'est-à-dire que les bases 5 sont chacune entourée de trois bases 7 liées chacune à ladite base 5 respective par un sommet. Les sommets desdites bases 5 pénètrent légèrement les sommets des bases 7, ce qui crée lesdits côtés rentrants 8 au niveau desdits sommets des bases 7. Des hexagones plans 35 complètent le plan médian, chacun de leurs côtés correspondant à un tronc de pyramide distinct. Comme représenté sur la figure 1, les faces quadrilatérales des troncs de pyramides ainsi que les hexagones 35 peuvent être évidés pour alléger la structure.

D'autres réseaux ainsi que d'autres formes pour les bases polygonales 5 et 7 desdits troncs de pyramides 4 et 6 peuvent être envisagés comme indiqué ci-après. Le plan médian 99 pourra être omis dans certains modes de réalisation.

La feuille 1 pourra par exemple être réalisée dans un matériau comme un plastique, un métal, un alliage, un matériau composite ou une résine. L'épaisseur du matériau constituant la feuille 1 pourra aller de 5 micromètres à 2 millimètres.

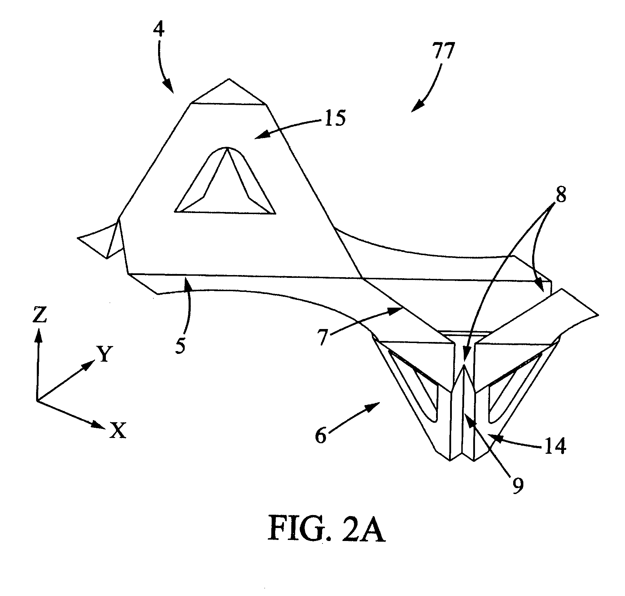

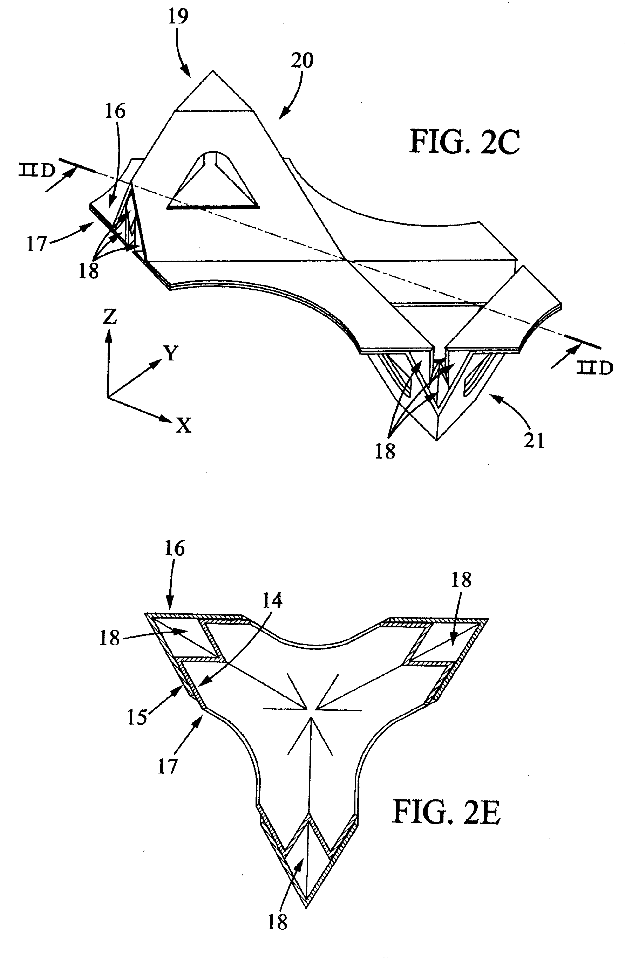

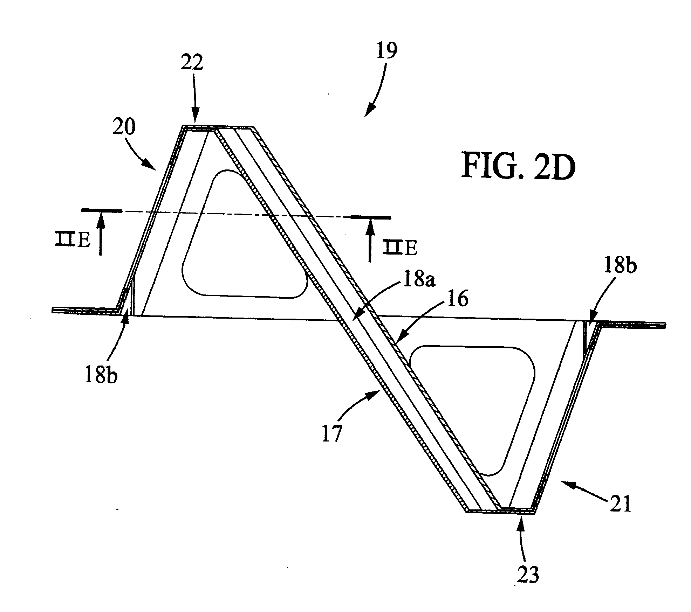

Les figures 2a à 2e présentent la façon de procéder à l'assemblage de deux feuilles selon une variante du mode de réalisation de la figure 1 pour constituer un réseau de canaux tubulaires creux.

Sur la figure 2a, une maille élémentaire 77 a été isolée à partir d'une variante du mode de réalisation de la feuille 1. Cette maille est constituée d'un tronc de pyramide 4 ainsi que d'un tronc de pyramide 6. Les zones rentrantes 9 forment des moitiés de canaux tubulaires creux et sont entourées de surfaces périphériques d'adhésion 14.

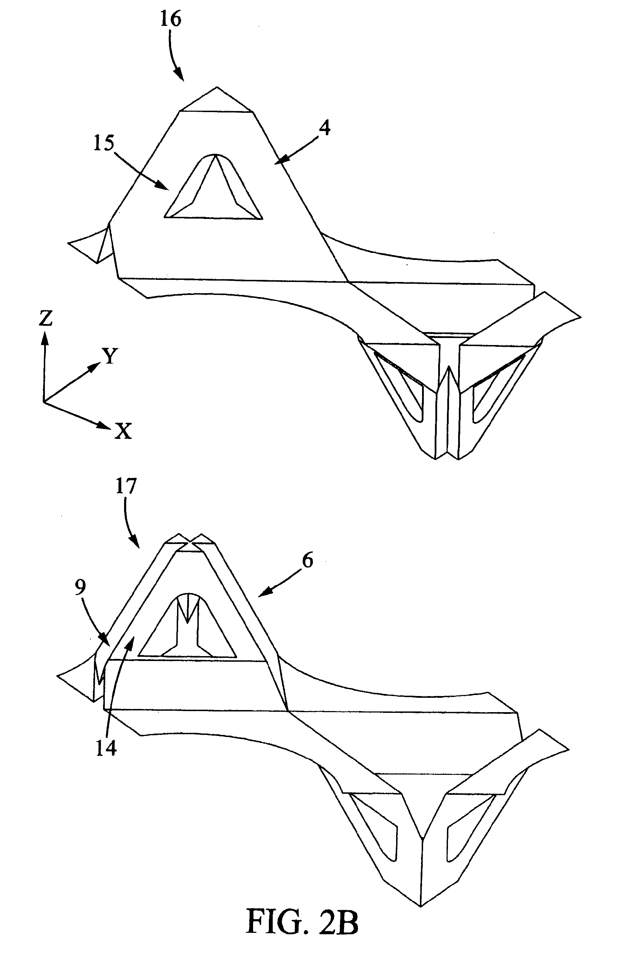

La figure 2b indique comment deux feuilles 16 et 17, identiques à la feuille 1 de la figure 1, doivent être positionnées l'une par rapport à l'autre avant d'être superposées pour créer ledit réseau de canaux creux. La feuille 16 est retournée par rapport à la feuille 17 suivant un axe de rotation situé dans le plan de ladite feuille 16, c'est-à-dire le plan (X, Y). Cette opération permet d'amener les troncs de pyramide 6 de la feuille 17 en regard des troncs de pyramide 4 de la feuille 16 et les surfaces périphériques d'adhésion 14 en regard des surfaces périphériques 15 parallèles.

Les feuilles 16 et 17 sont ensuite amenées au contact l'une de l'autre et fixées ensemble au niveau des surfaces 14 et 15 pour obtenir le sandwich 19 de la figure 2c. La superposition des troncs de pyramides 6 de la feuille 17 et des troncs de pyramides 4 de la feuille 16 permet de compléter les zones rentrantes 9 du tronc de pyramide 6 par les parois du tronc de pyramide 4 pour obtenir des canaux tubulaires creux 18 dont les parois sont formées à la fois par la feuille 16 et par la feuille 17. Le sandwich 19 de la figure 2c comporte donc des troncs de pyramides 20 situés sur la face supérieure et des troncs de pyramides 21 situés sur la face inférieure, lesdits troncs 20 et 21 étant symétriques l'un de l'autre par rapport au plan (X, Y), constitués par l'assemblage des deux feuilles 16 et 17 et comprennent chacun des canaux tubulaires creux 18.

La coupe 2d du sandwich 19, réalisée suivant le plan (X, Z) permet d'observer un canal tubulaire creux 18a coupé par un plan comprenant sa direction de canal, ledit canal creux étant donc visible dans sa plus grande extension, ainsi que deux canaux tubulaire creux 18b dont les directions de canal sont situées suivant la direction Y et qui sont donc coupés transversalement à ladite direction de canal. Les parois des canaux 18a et 18b sont constituées pour partie par la feuille 16 et pour le reste par la feuille 17. Le canal 18a s'étend depuis le sommet 22 de la pyramide 20 jusqu'au sommet 23 de la pyramide 21. Sa direction de canal comprend donc des composantes non-nulles suivant les directions X et Z. Les directions des canaux 18b comprennent quant à elles des composantes non-nulles suivant la direction Y. D'autres canaux tubulaires creux 18 du sandwich 19 possèderont des directions de canal s'étendant suivant d'autres directions de l'espace.

La coupe IIE du sandwich 19, réalisée suivant le plan (X, Y) au niveau du tronc de pyramide 20, permet d'observer trois canaux tubulaires creux 18 situés au niveau des sommets de la base 7 dudit tronc de pyramide 20. La coupe IIE permet aussi d'observer la superposition des surfaces périphériques 14 et 15 permettant la fixation des feuilles 16 et 17 entre elles.

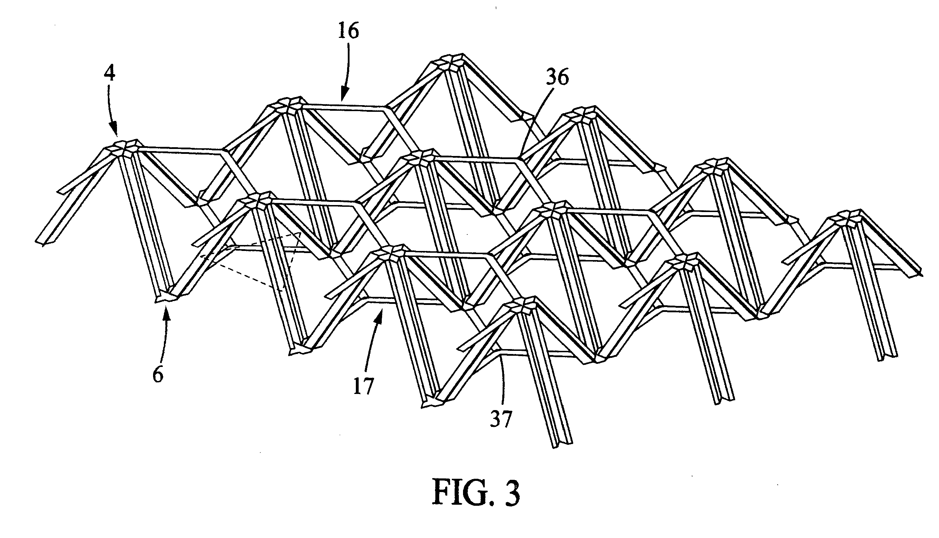

La figure 3 présente un sandwich 19 suivant un autre mode de réalisation de la présente invention. Le réseau des canaux creux est tridimensionnel, lesdits canaux s'étendant suivant toutes les directions de l'espace, ce qui confère à la structure des propriétés mécaniques intéressantes. Dans le mode de réalisation présenté sur la figure 3, des ouvertures sont pratiquées dans les feuilles 16 et 17 pour ne conserver que les parois des canaux tubulaires creux et les surfaces d'adhésion périphériques, ceci afin d'alléger ladite structure. Ainsi, ce mode de réalisation ne présente pas de plan médian, la base d'une pyramide étant représentée en pointillés. De plus, des sommets adjacents de pyramide sont reliés entre eux, par exemple 3 à 3, par une structure radiale 36, 37 respective.

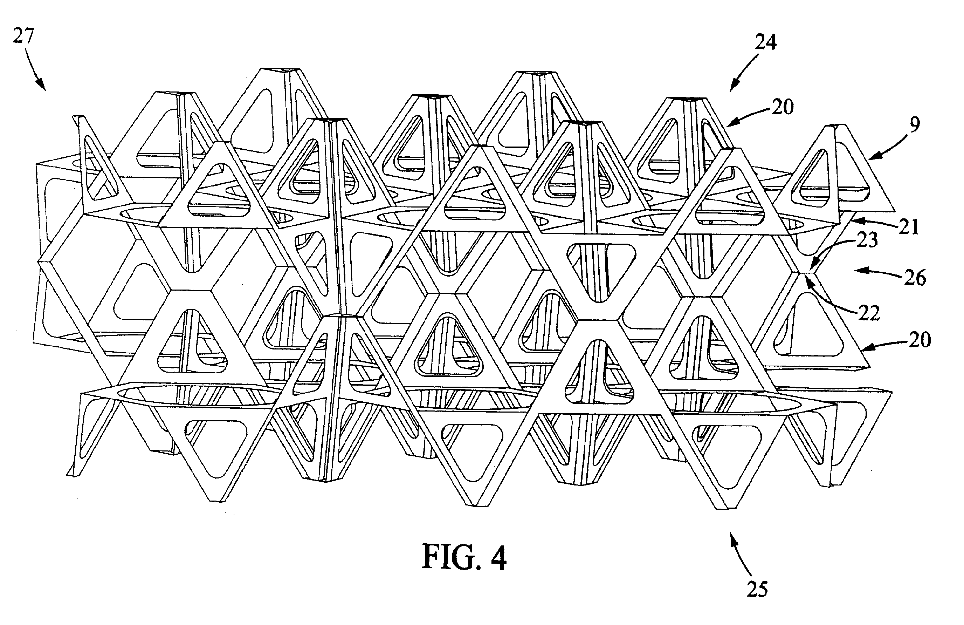

Selon un mode de réalisation de la présente invention représenté sur la figure 4, deux sandwichs 24 et 25, constitués chacun de deux feuilles superposées 16 et 17 comme détaillé sur la figure 2c pour le sandwich 19, peuvent être superposés pour donner plus d'étendue spatiale à l'âme 27 dans sa direction d'épaisseur. Les sandwichs 24 et 25 sont reliés entre eux par l'assemblage 26 des sommets 23 des troncs de pyramides 21 du sandwich 24 et des sommets 22 des troncs de pyramides 20 du sandwich 25.

Suivant d'autres modes de réalisations de la présente invention, d'autres sandwichs de feuilles 19 pourront être superposés à ladite âme 27, ceci permettant de constituer une âme d'épaisseur arbitraire.

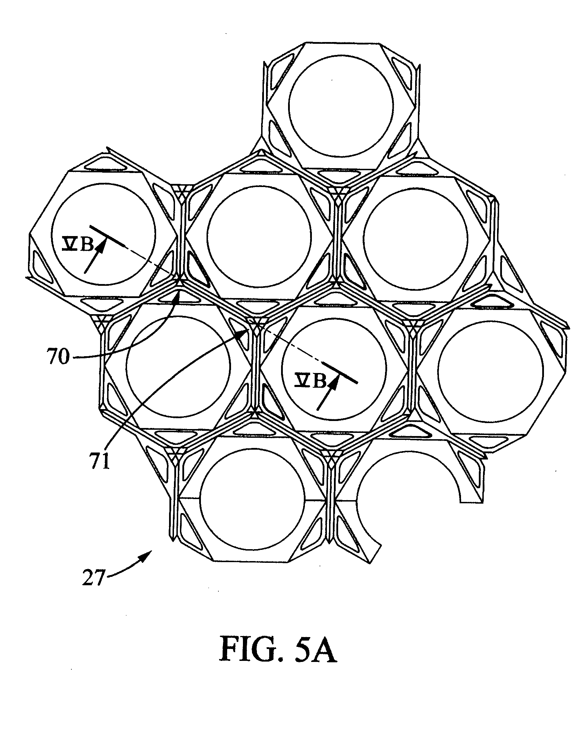

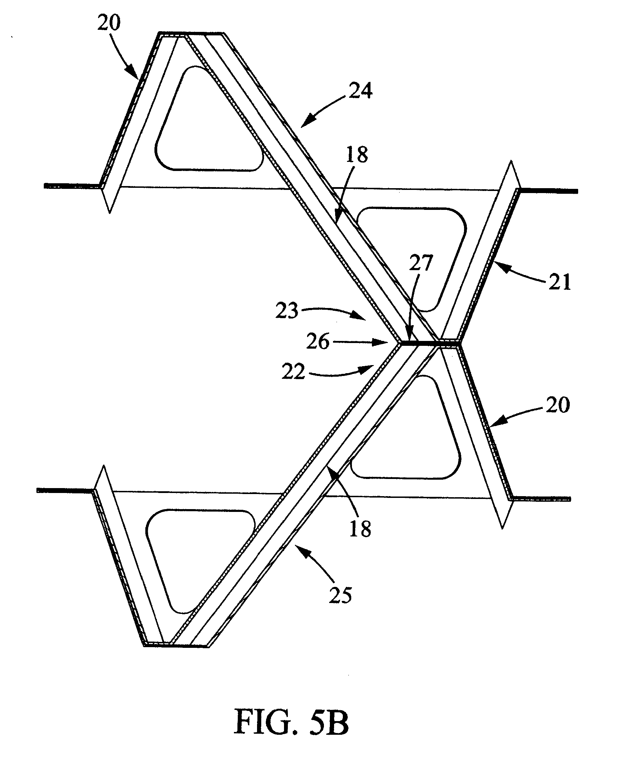

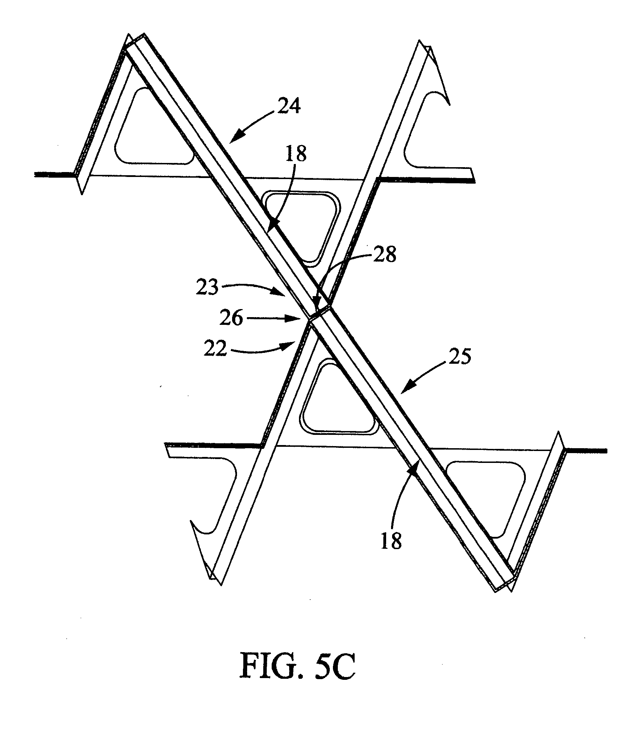

Les figures 5a, 5b et 5c présentent deux modes de réalisation de l'assemblage 26 desdits sommets 22 et 23 des sandwichs 24 et 25. La figure 5a est une vue de dessus de l'âme 27 de la figure 4 permettant d'indiquer le plan des coupes VB et VC.

Dans un premier mode de réalisation des sommets 22 et 23, présenté figure 5b, lesdits sommets sont constitués par des surfaces planes 27. L'assemblage 26 desdites surfaces planes 27 permet de mettre en regard les extrémités des canaux tubulaires creux 18 des sandwichs 24 et 25.

Dans un second mode de réalisation, illustré figure 5c, les sommets 22 et 23 présentent des parties en retrait 28 permettant l'alignement des directions de canal des canaux 18 du sandwich 24 et du sandwich 25. La coupe VC desdites parties en retrait 28 est orthogonale à la direction de canal des canaux 18. Ce mode de réalisation permet le meilleur transfert des efforts exercés sur les canaux tubulaires 18 d'un sandwich à l'autre.

D'autres modes de réalisation dudit assemblage 26 pourront être utilisés par l'homme du métier en variant la géométrie des sommets 22 et 23.

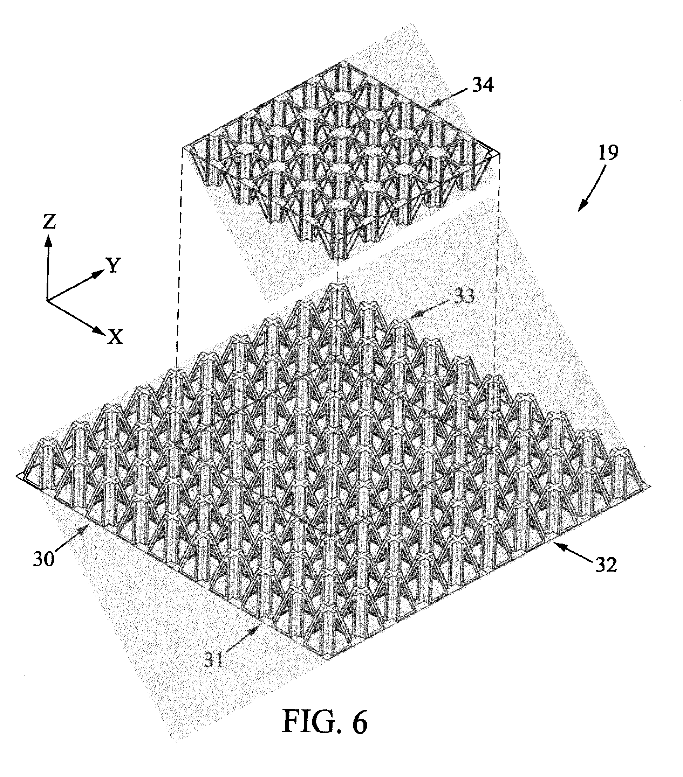

Enfin, comme illustré par la figure 6, le sandwich 19 de deux feuilles peut être réalisé en quinconce de façon à former une âme de matériau structural sandwich de grande extension. Pour ce faire selon un mode de réalisation, la feuille 34 est superposée et fixée à cheval sur quatre feuilles 30, 31, 32 et 33 de façon à former une structure résistante. L'assemblage en quinconce permet une amélioration importante des propriétés mécaniques lors de l'assemblage de plusieurs feuilles dans le plan d'extension (X, Y), en comparaison d'un simple collage des extrémités desdites feuilles ou d'une simple superposition développable.

Selon d'autres modes de réalisation de l'invention, les côtés rentrants 8 pourront être placés à d'autres endroits de la base 7, par exemple sur les côtés de ladite base, et pourront être, dans tous les modes de réalisation, remplacés par ou associés à des côtés sortants, s'étendant par les arêtes 12 en zones sortantes, sur les troncs de pyramides 4 ou 7.

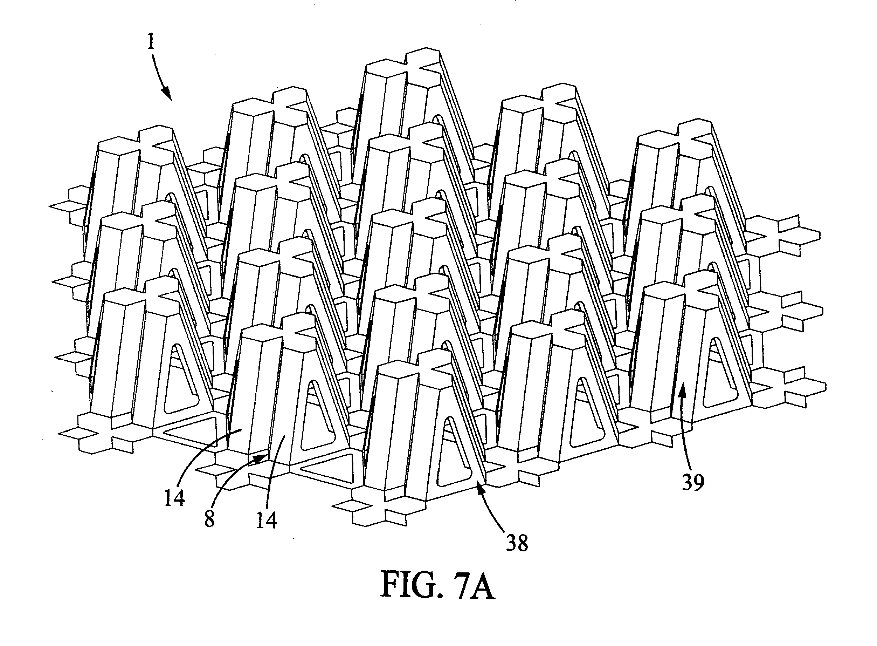

La figure 7a présente un autre mode de réalisation de la feuille 1 extraite de l'assemblage constituant l'âme du matériau structural sandwich. Dans ce mode de réalisation, les troncs de pyramide sont à base hexagonale et comportent des faces triangulaires évidées 38 alternées avec des faces quadrilatérales 39. Les zones rentrantes 8 sont formées dans les faces quadrilatérales 39 des troncs de pyramides. La partie entourant la zone rentrante forme la surface périphérique d'adhésion 14. Le plan médian 99 est absent de ce mode de réalisation.

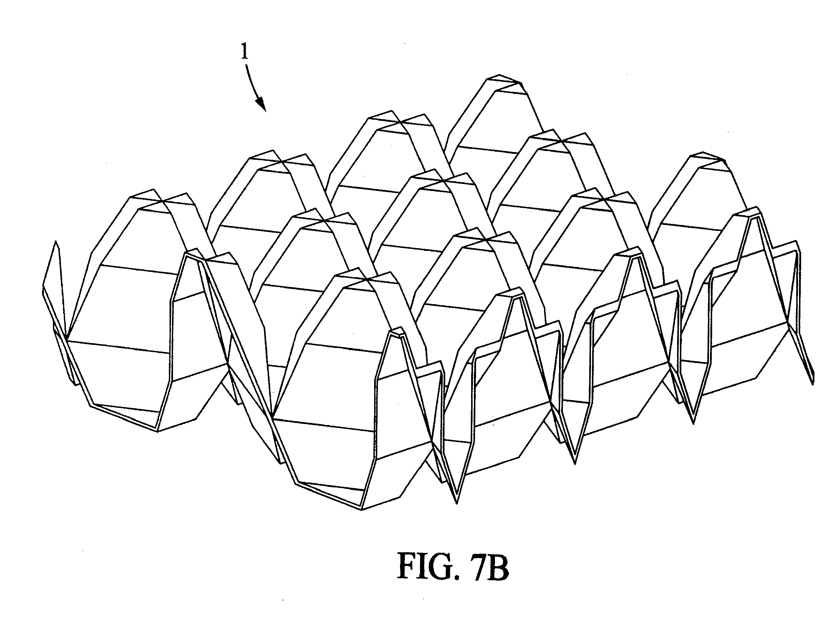

La figure 7b présente un autre mode de réalisation de ladite feuille 1 dans lequel les troncs de pyramides sont assemblés suivant un réseau triangulaire, les bases triangulaires desdits troncs étant jointes par leurs cotés.

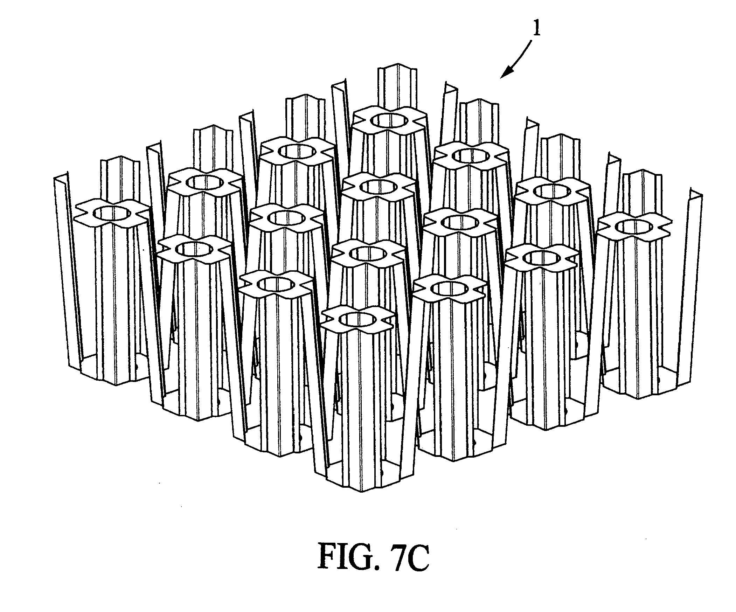

La figure 7c présente encore un autre mode de réalisation pour ladite feuille présentée figure 1, les troncs de pyramides étant à base carrée, avec des zones en retrait situées au niveau des arêtes desdits carrés.

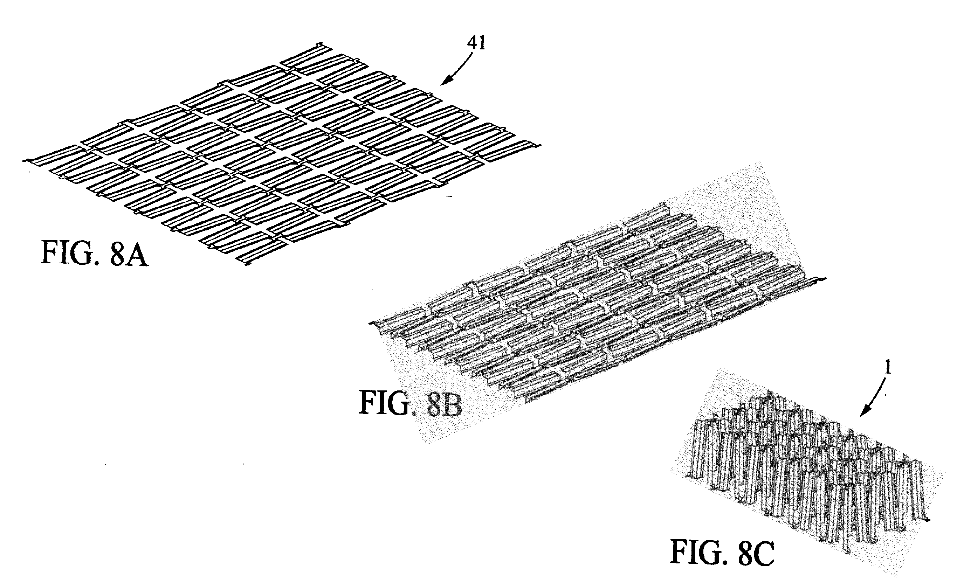

Un procédé de fabrication d'une feuille conforme à l'invention est illustré sur les figures 8a, 8b et 8c. Partant d'une feuille 41 munie d'ouvertures, deux étapes de pliage indiquées sur les figures 8a et 8b permettent de d'aboutir à la feuille 1 présentée figure 8c.

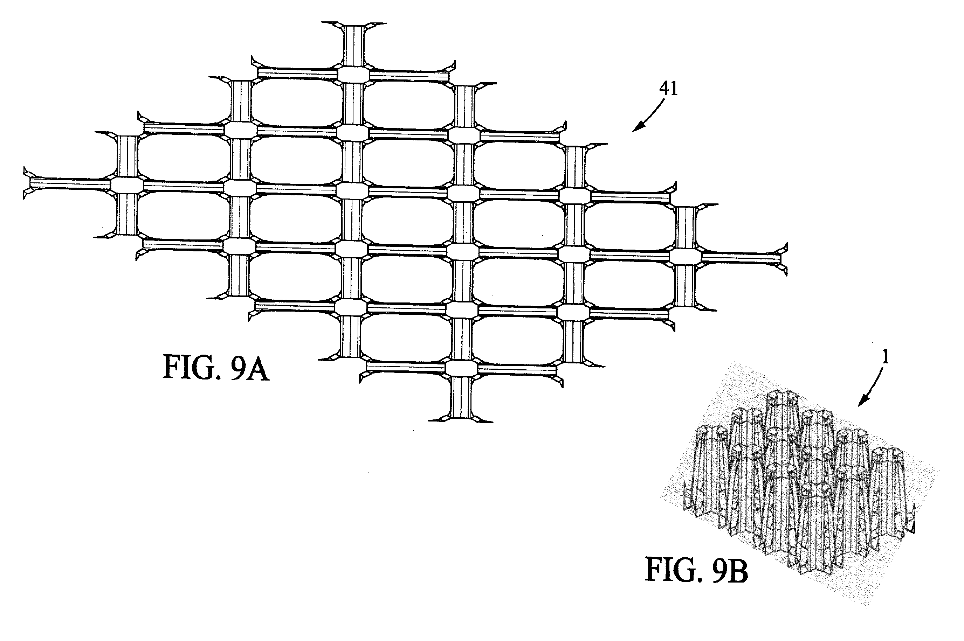

Un autre procédé de réalisation d'une feuille de la présente invention est présenté sur les figures 9a et 9b, dans lequel une seule étape de pliage permet, partant d'une feuille 41 préalablement munie d'ouvertures présentée figure 9a, de parvenir à la feuille 1 de la figure 9b.

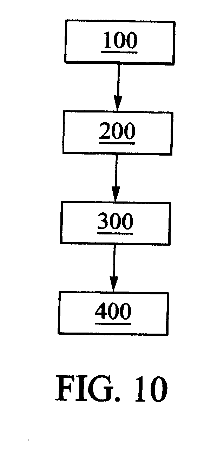

Enfin, un procédé de fabrication d'une âme de matériau structural sandwich selon un mode de réalisation est illustré Figure 10, une première étape 100, optionnelle, consiste à pratiquer des ouvertures dans une feuille pour alléger le matériau et permettre si besoin un pliage aisé de ladite feuille. Au cours d'une étape 200 les troncs de pyramide sont formés dans ladite feuille par pliage de ladite feuille, déformation plastique, embossage, moulage de la feuille par injection et/ou toute autre méthode ou combinaison des méthodes précédemment citées permettant de réaliser une telle feuille munie de tronc de pyramides. Une étape 300 consiste ensuite à superposer et fixer deux à deux les feuilles munies de leurs troncs de pyramides pour obtenir le réseau de conduits tubulaires creux. Enfin au cours d'une étape 400 on superpose et on fixe l'une à l'autre des sandwichs obtenus à l'étape 300 pour former une âme de dimensions arbitraires.

On peut obtenir un matériau structural sandwich en superposant, sur au moins l'une des faces opposée d'une âme obtenue par un des modes de réalisation du procédé de fabrication précédemment décrit, une peau externe ou deux peaux externes. Lesdites peaux sont par exemple formées en matière composite d'un plastique renforcé par des fibres.

## Revendications

1. Âme de matériau structural sandwich comprenant un assemblage de plusieurs feuilles comportant une première feuille (17) s'étendant sensiblement selon des directions d'extension (X, Y), et présentant une première (2) et une deuxième (3) faces opposées selon une direction d'épaisseur (Z), cette feuille étant munie sur au moins l'une de ses faces (2) d'une pluralité de troncs de pyramides (6) à base polygonale (7) répartis périodiquement, **caractérisé en ce qu'**elle comporte au moins une deuxième feuille (16) présentant les mêmes caractéristiques que ladite première feuille (17) et
**en ce que** la superposition desdites première (17) et deuxième (16) feuilles dans la direction d'épaisseur (Z) forme un réseau tridimensionnel de canaux tubulaires creux (18) s'étendant d'une face d'une feuille à une face d'une autre feuille selon une direction de canal, et définis chacun par une paroi périphérique, cette paroi périphérique étant fournie à la fois par la première (17) feuille et par la seconde (16) feuille.

2. Âme selon la revendication 1 **caractérisée en ce que** lesdites première (17) et deuxième (16) feuilles sont identiques, la deuxième feuille étant retournée par rapport à la première suivant un axe compris dans le plan d'extension (X,Y) afin de créer ledit réseau de canaux creux (18) lors de la superposition desdites feuilles.

3. Âme selon l'une quelconque des revendications précédentes dans laquelle lesdits troncs de pyramide (6) comprennent chacun une base (7), un sommet (13) et des arêtes (12) reliant la base (7) au sommet (13), lesdites arêtes ménageant des zones rentrantes (9) situées entre des surfaces périphériques d'adhésion (14), les zones rentrantes (9) d'une première feuille (17) pouvant être complétée par des surfaces d'une deuxième feuille (16) et former ainsi des canaux tubulaires creux (18).

4. Âme selon l'une quelconque des revendications précédentes dans laquelle le réseau de canaux tubulaires creux (18) comprend au moins trois canaux dont les directions de canal sont non coplanaires.

5. Âme selon l'une quelconque des revendications précédentes dans laquelle la superposition des premières et secondes feuilles est réalisée en quinconce, la seconde feuille (34) étant placée à cheval sur la première feuille (30) et sur d'autres feuilles (31, 32, 33) de l'assemblage de plusieurs feuilles.

6. Âme selon l'une quelconque des revendications précédentes **caractérisée en ce que** ladite âme comporte une troisième feuille et une quatrième feuille s'étendant toutes deux sensiblement selon des directions d'extension (X, Y) et présentant chacune des première et deuxième faces opposées selon une direction d'épaisseur (Z), chaque feuille étant munie sur au moins l'une de ses faces d'une pluralité de troncs de pyramide à base polygonale répartis périodiquement,
**en ce que** la superposition desdites troisième et quatrième feuilles dans la direction d'épaisseur forme un réseau tridimensionnel de canaux tubulaires creux s'étendant d'une face d'une feuille à une face d'une autre feuille selon une direction de canal, et définis chacun par une paroi périphérique, cette paroi périphérique étant fournie à la fois par la troisième et la quatrième feuilles,
**en ce que** lesdites première et quatrième feuilles sont superposées et fixées l'une à l'autre par l'assemblage (26) des sommets (22, 23) de chacun desdits troncs de pyramide desdites première et quatrième feuilles.

7. Âme selon la revendication 6 **caractérisée en ce que** les sommets (22, 23) desdits troncs de pyramide desdites première et quatrième feuilles présentent une surface plane (27) de façon à assurer la continuité des canaux tubulaires creux (18) lors de la superposition de plusieurs assemblages (24, 25) de feuilles.

8. Âme selon la revendication 6 **caractérisée en ce que** les sommets (22, 23) des troncs de pyramide desdites première et quatrième feuilles présentent des parties en retrait (28) de façon à assurer l'alignement des directions de canal des canaux tubulaires creux (18) lors de la superposition de plusieurs assemblages (24, 25) de feuilles.

9. Feuille (1 ; 16 ; 17) munie sur au moins l'une de ses faces (2) d'une pluralité de troncs de pyramide (6) à base polygonale (7), répartis périodiquement, lesdits troncs de pyramides présentant des zones rentrantes (9) situées entre les surfaces périphériques d'adhésion (14), les zones rentrantes (9) d'une telle feuille pouvant être complétées par les surfaces d'une feuille superposée pour définir des canaux tubulaires creux (18).

10. Matériau structural sandwich caractérisé en qu'il comporte une âme (27) constituée par une structure conforme à au moins l'une quelconque des revendications 1 à 8 et au moins une peau externe fixée sur au moins l'une des faces opposées de ladite structure.

11. Procédé pour la réalisation d'une âme de matériau structural sandwich composée d'assemblage de plusieurs feuilles comportant au moins une première (17) et deuxième (16) feuilles munies sur au moins l'une (2) de leurs faces d'une pluralité de troncs de pyramide (6) à base polygonale (7) répartis périodiquement, lesdites pyramides (6) présentant des zones rentrantes (9) situées entre les surfaces périphériques d'adhésion (14), les zones rentrantes (9) desdites feuilles superposées définissant des canaux tubulaires creux (18), **caractérisé en ce qu'**il comprend au moins les étapes suivantes :
une étape (200) consistant à former lesdits troncs de pyramide dans lesdites feuilles, et
une étape (300) consistant à superposer et fixer l'une à l'autre lesdites feuilles.

12. Procédé selon la revendication précédente **caractérisé en ce que** l'étape (200) consistant à former lesdits troncs de pyramide dans lesdites feuilles comprends une étape de pliage desdites feuilles.

13. Procédé selon la revendication 11 **caractérisé en ce que** l'étape (200) consistant à former lesdits troncs de pyramide dans lesdites feuilles comprend une étape de déformation plastique desdites feuilles.

14. Procédé suivant l'une des revendications 11 à 13 **caractérisé en ce qu'**il comprend en outre une étape (100) consistant à pratiquer une pluralité d'ouvertures dans lesdites feuilles préalablement à leur mise en forme de façon à alléger l'âme du matériau structural.

15. Procédé pour la réalisation d'une âme de matériau structural sandwich selon l'une des revendications 11 à 14 **caractérisé en ce que** l'on forme (100, 200) et l'on assemble (300) une troisième et une quatrième feuilles de façon identique auxdites première et deuxième feuilles et, au cours d'une étape ultérieure (400), on superpose et on fixe l'une à l'autre lesdites première et quatrième feuilles par les sommets de leurs troncs de pyramide.

## Patentansprüche

1. Kern eines Sandwichstrukturmaterials, der eine Mehrplattenanordnung aufweist, die eine erste Platte (17) aufweist, die sich im Wesentlichen entlang von Ausdehnungsrichtungen (X,Y) erstreckt und eine erste (2) und eine zweite (3) Oberfläche hat, die sich in Richtung der Dicke (Z) gegenüberliegen, wobei diese Platte an mindestens einer ihrer Oberflächen (2) mit mehreren Pyramidenstümpfen (6) versehen ist, die jeweils eine polygonale Basis (7) aufweisen und regelmäßig verteilt angeordnet sind, **dadurch gekennzeichnet, dass** der Kern mindestens eine zweite Platte (16) mit den gleichen Merkmalen wie die erste Platte (17) aufweist, und
dadurch dass das Aufeinanderstapeln der ersten (17) und zweiten (16) Platte in Richtung der Dicke (Z) ein dreidimensionales Netzwerk von röhrenförmigen Hohlkanälen (18) entstehen lässt, die sich von einer Oberfläche der einen Platte zu einer Oberfläche der anderen Platte in eine Kanalrichtung erstrecken und jeweils von einer Umfangswand umgrenzt sind, wobei diese Umfangswand zugleich von der ersten (17) Platte und zweiten (16) Platte bereitgestellt wird.

2. Kern nach Anspruch 1, **dadurch gekennzeichnet, dass** die erste (17) und zweite (16) Platte identisch sind, wobei die zweite Platte bezüglich der ersten um eine in der Ausdehnungsebene (X,Y) liegende Achse gewendet ist, um beim Aufeinanderstapeln der Platten das Netzwerk aus Hohlkanälen (18) zu bilden.

3. Kern nach einem der vorstehenden Ansprüche, in welchem die Pyramidenstümpfe (6) jeweils eine Basis (7), eine Deckfläche (13) und Kanten (12), die die Basis (7) mit der Deckfläche (13) verbinden, aufweisen, wobei die Kanten vertiefte Zonen (9) ausgespart haben, die zwischen peripheren Haftflächen (14) angeordnet sind, wobei die vertieften Zonen (9) einer ersten Platte (17) von Flächen einer zweiten Platte (16) vervollständigt werden können und so röhrenförmige Hohlkanäle (18) bilden können.

4. Kern nach einem der vorstehenden Ansprüche, in welchem das Netzwerk von röhren-förmigen Hohlkanälen (18) mindestens drei Kanäle aufweist, deren Kanalrichtungen nicht komplanar sind.

5. Kern nach einem der vorstehenden Ansprüche, in welchem das Aufeinanderstapeln der ersten und zweiten Platten in Fünferanordnung (Quincunxanordnung) erfolgt, wobei die zweite Platte (34) oberhalb der ersten Platte (30) und oberhalb anderer Platten (31,32,33) der Mehrplattenanordnung angeordnet ist.

6. Kern nach einem der vorstehenden Ansprüche, **dadurch gekennzeichnet, dass** der Kern eine dritte Platte und eine vierte Platte aufweist, die sich beide im Wesentlichen in Ausdehnungsrichtungen (X,Y) erstrecken und jeweils eine erste und zweite Oberfläche, die sich in Richtung der Dicke (Z) gegenüberliegen, aufweisen, wobei jede Platte an mindestens einer ihrer Oberflächen mit mehreren Pyramidenstümpfen versehen ist, die jeweils eine polygonale Basis aufweisen und regelmäßig verteilt angeordnet sind,
dadurch, dass das Aufeinanderstapeln der dritten und vierten Platte in Richtung der Dicke ein dreidimensionales Netzwerk von röhrenförmigen Hohlkanälen entstehen lässt, die sich von einer Oberfläche der einen Platte zu einer Oberfläche der anderen Platte in eine Kanalrichtung erstrecken und jeweils von einer Umfangswand umgrenzt sind, wobei diese Umfangswand zugleich von der dritten und vierten Platte bereitgestellt wird, und
dadurch, dass die erste und vierte Platte aufeinander gestapelt sind und durch das Zusammenfügen (26) der Deckflächen (22,23) jedes der Pyramidenstümpfe der ersten und vierten Platte miteinander verbunden sind.

7. Kern nach Anspruch 6, **dadurch gekennzeichnet, dass** die Deckflächen (22,23) der Pyramidenstümpfe der ersten und vierten Platte eine ebene Oberfläche (27) aufweisen, um so beim Aufeinanderstapeln von mehreren Plattenanordnungen (24,25) die Kontinuität der röhrenförmigen Hohlkanäle (18) sicherzustellen.

8. Kern nach Anspruch 6, **dadurch gekennzeichnet, dass** die Deckflächen (22,23) der Pyramidenstümpfe der ersten und vierten Platte rückspringende Abschnitte (28) aufweisen, um so beim Aufeinanderstapeln von mehreren Plattenanordnungen (24,25) die Ausrichtung der Kanalrichtungen der röhrenförmigen Hohlkanäle (18) sicherzustellen.

9. Platte (1;16;17), die an mindestens einer ihrer Oberflächen (2) mit mehreren Pyramidenstümpfen (6) versehen ist, die jeweils eine polygonale Basis (7) haben und regelmäßig verteilt angeordnet sind, wobei die Pyramidenstümpfe vertiefte Zonen (9) haben, die zwischen den peripheren Haftflächen (14) angeordnet sind, wobei die vertieften Zonen (9) einer solchen Platte von den Oberflächen einer darauf gestapelten Platte vervollständigt werden können, um röhrenförmige Hohlkanäle (18) zu bilden.

10. Sandwichstrukturmaterial, **dadurch gekennzeichnet, dass** es einen Kern (27) aufweist, der aus einer Struktur nach mindestens einem der Ansprüche 1 bis 8 und mindestens einer Außenhaut gebildet ist, die an mindestens einer der gegenüberliegenden Oberflächen der Struktur angebracht ist.

11. Verfahren zur Herstellung eines Kerns eines Sandwichstrukturmaterials, der aus einer Mehrplattenanordnung besteht, die mindestens eine erste (17) und zweite (16) Platte aufweist, die an mindestens einer (2) ihrer Oberflächen mit mehreren Pyramidenstümpfen (6) versehen sind, die jeweils eine polygonale Basis (7) haben und regelmäßig verteilt angeordnet sind, wobei die Pyramiden(stümpfe) (6) vertiefte Zonen (9) haben, die zwischen peripheren Haftflächen (14) angeordnet sind, wobei die vertieften Zonen (9) der aufeinander gestapelten Platten röhrenförmige Hohlkanäle (18) bilden, **dadurch gekennzeichnet, dass** das Verfahren mindestens die folgenden Schritte aufweist:
einen Schritt (200), der darin besteht, in den Platten die Pyramidenstümpfe zu formen, und
einen Schritt (300), der darin besteht, die Platten aufeinander zu stapeln und miteinander zu verbinden.

12. Verfahren nach dem vorstehenden Anspruch, **dadurch gekennzeichnet, dass** der Schritt (200), der darin besteht, in den Platten die Pyramidenstümpfe zu formen, einen Schritt des Biegens der Platten aufweist.

13. Verfahren nach Anspruch 11, **dadurch gekennzeichnet, dass** der Schritt (200), der darin besteht, in den Platten die Pyramidenstümpfe zu formen, einen Schritt des plastischen Umformens der Platten aufweist.

14. Verfahren nach einem der Ansprüche 11 bis 13, **dadurch gekennzeichnet, dass** es ferner einen Schritt (100) aufweist, der darin besteht, vor der Formgebung der Platten die Platten mit mehreren Öffnungen zu versehen, um den Kern des Strukturmaterials leichter im Gewicht zu machen.

15. Verfahren zur Herstellung eines Kerns eines Sandwichstrukturmaterials nach einem der Ansprüche 11 bis 14, **dadurch gekennzeichnet, dass** eine dritte und eine vierte Platte auf gleiche Art wie die erste und zweite Platte geformt (100,200) und zusammengefügt (300) werden und dass im Verlaufe eines nachfolgenden Schritts (400) die erste und vierte Platte aufeinander gestapelt werden und über die Deckflächen ihrer Pyramidenstümpfe miteinander verbunden werden.

## Claims

1. Core of sandwich structural material comprising an assembly of multiple sheets having a first sheet (17) extending substantially in directions of extension (X, Y) and having opposing first (2) and second (3) faces in a direction of thickness (Z), at least one face (2) of this sheet being provided with a plurality of periodically distributed truncated pyramids (6) with a polygonal base (7), **characterised in that** it comprises at least a second sheet (16) having the same characteristics as said first sheet (17) and
**in that** said first (17) and second (16) sheets are superposed in the direction of thickness (Z) to form a three-dimensional network of hollow tubular channels (18) extending from a face of one sheet to a face of another sheet in a channel direction, each being defined by a peripheral wall, which peripheral wall is provided by both the first sheet (17) and the second sheet (16).

2. Core as claimed in claim 1, **characterised in that** said first (17) and second (16) sheet are identical, the second sheet being folded relative to the first one along an axis disposed within the extension plane (X, Y) in order to create said network of hollow channels when said sheets are superposed.

3. Core as claimed in any one of the preceding claims, in which said truncated pyramids (6) each comprise a base (7), an apex (13) and edges (12) connecting the base(7) to the apex (13), said edges delimiting recessed areas (9) disposed between peripheral adhesion surfaces (14), the recessed areas (9) of a first sheet (17) being completed by surfaces of a second sheet (16), thereby enabling hollow tubular channels (18) to be formed.

4. Core as claimed in any one of the preceding claims, in which the network of hollow tubular channels (18) comprises at least three channels, the channel directions of which are non-coplanar.

5. Core as claimed in any one of the preceding claims, in which first and second sheets are superposed in a staggered arrangement, the second sheet (34) being positioned so as to straddle the first sheet (30) and other sheets (31, 32, 33) of the assembly of multiple sheets.

6. Core as claimed in any one of the preceding claims, **characterised in that** said core comprises a third sheet and a fourth sheet, both extending substantially in directions of extension (X, Y) and each having opposing first and second faces in a direction of thickness (Z), each sheet being provided on at least one of its faces with a plurality of periodically distributed truncated pyramids with a polygonal base,
**in that** said third and fourth sheets are superposed in the direction of thickness to form a three-dimensional network of hollow tubular channels extending from a face of one sheet to a face of another sheet in a channel direction, and each defined by a peripheral wall, which peripheral wall is provided by both the third and fourth sheets,
**in that** said first and fourth sheets are superposed and affixed to one another by the assembly (26) of apexes (22, 23) of each of said truncated pyramids of said first and fourth sheets.

7. Core as claimed in claim 6, **characterised in that** the apexes (22, 23) of said truncated pyramids of said first and fourth sheets form a flat surface (27) to ensure the continuity of the hollow tubular channels (18) when multiple assemblies (24, 25) of sheets are superposed.

8. Core as claimed in claim 6, **characterised in that** the apexes (22, 23) of the truncated pyramids of said first and fourth sheets have angled parts (28) to ensure that the channel directions of the hollow tubular channels (18) are aligned when multiple assemblies (24, 25) of sheets are superposed.

9. Sheet (1; 16; 17) provided with a plurality of truncated pyramids (6) with a polygonal base (7) distributed periodically on at least one of its faces (2), said truncated pyramids having recessed areas (9) disposed between the peripheral adhesion surfaces (14), the recessed areas (9) of such a sheet being completed by the surfaces of a superposed sheet so as to define hollow tubular passages (18).

10. Sandwich structural material **characterised in that** it comprises a core (27) based on a structure as claimed in at least any one of claims 1 to 8 and at least one outer skin affixed to at least one of the opposing faces of said structure.

11. Method of producing a core of sandwich structural material made from an assembly of multiple sheets comprising at least a first (17) and a second (16) sheet provided on at least one (2) of their faces with a plurality of periodically distributed truncated pyramids (6) with a polygonal base (7), said pyramids (6) having recessed areas (9) disposed between the peripheral adhesion surfaces (14), the recessed areas (9) of said superposed sheets defining hollow tubular channels (18), **characterised in that** it comprises at least the following steps:
a step (200) of forming said truncated pyramids in said sheets, and
a step (300) of superposing and affixing one of said sheets to the other.

12. Method as claimed in the preceding claim, **characterised in that** step (200) consisting of forming said truncated pyramids in said sheets comprises a step of folding said sheets.

13. Method as claimed in claim 11, **characterised in that** step (200) consisting of forming said truncated pyramids in said sheets comprises a step of plastically deforming said sheets.

14. Method as claimed in one of claims 11 to 13, **characterised in that** it further comprises a step (100) of forming a plurality of openings in said sheets prior to shaping them in order to reduce the weight of the structural material core.

15. Method of producing a core of sandwich structural material as claimed in one of claims 11 to 14, **characterised in that** a third and a fourth sheet are shaped (100, 200) and assembled (300) in a manner identical to said first and second sheets and during a subsequent step (400), said first and fourth sheets are superposed and affixed to one another by the apexes of their truncated pyramids.
